# EUROPEAN PATENT SPECIFICATION

(11) **EP 0 511 463 B1**
(45) Date of publication and mention of the grant of the patent: **11.08.1999**
(21) Application number: 92102006.1
(22) Date of filing: 06.02.1992
(51) Int. Cl.: G07G 5/00, G07F 9/02

(54) **Method and apparatus for generating cumulative discount certificates**
Verfahren und Vorrichtung zur Erzeugung von kumulativen Rabattzertifikaten
Méthode et appareil pour la génération de certificats de rabais cummulatifs

(30) Priority: 06.02.1991 US 652324
(43) Date of publication of application: 04.11.1992
(73) Proprietor: CATALINA MARKETING INTERNATIONAL, INC., Anaheim, California 92805 (US)
(72) Inventor: Greer, Tommy D., Newport Beach, California 92660 (US); Cherney, Timothy L., Fullerton, California 92633 (US); Off, George W., Greenville, South Carolina 29605 (US)
(74) Representative: Molyneaux, Martyn William

(56) References cited:
- EP-A- 253 240
- WO-A-86/03310
- WO-A-90/08440
- US-A- 4 674 041
- US-A- 4 949 256

## Description

### BACKGROUND OF THE INVENTION

This invention relates generally to point-of-sale computer systems of the type used in retail stores to record sales transactions. More particularly, the invention relates to point-of-sale systems capable of handling discount coupons. Most point-of-sale systems have terminals that are capable of reading a code printed on each product package, and thereby determining the price from an internal file that is accessed by a store controller. Products are coded by means of a series of parallel lines, in accordance with a convention known as the Universal Product Code.

As every grocery shopper knows, many manufacturers distribute discount coupons for their products, either through the mail, or by printing them in newspapers or magazines, or enclosing them in similar or related product packages. When a customer presents a discount coupon at the time of purchase of an appropriate product, the grocery checker operating the terminal will typically key in the coupon amount, and the discount will be subtracted from the customer's bill.

This procedure often has the disadvantage that the customer may not have actually purchased the discountable product, and the coupon will then be improperly redeemed. A further disadvantage, from a customer standpoint, is that collecting coupons and taking them to the store is inconvenient, and many customers simply do not participate in any promotional program involving distributed coupons. This represents a significant loss for the manufacturers or retailers that distribute the coupons.

In related US-A-4,910,672 and US-A-4,723,212, systems are disclosed for generating printable discount coupons at a checkout counter, as a result of the purchase of one or more "triggering" products. A customer may then be presented with a discount coupon for use on a subsequent visit. This technique has proved to be very successful in distributing single discount coupons in response to the purchase of selected products or groups of products, but does not address other important marketing goals of retailers.

EP-A-0 370 847 discloses a sales-data-processing apparatus which records the total price of purchases eligible for a rebate and makes it possible for a customer to use all or part of the rebate when the rebate reaches an amount determined by the customer. The rebate is calculated by using a fixed amount method or a fixed rate method. A checkout till receipt is produced which lists rebated items and signifies the amount of rebate together with the total cost of goods purchased and the cash tendered. Moreover, coupon data, for instance the total amount eligible for rebate and the rebate for future purchases, can also be indicated on the receipt. The apparatus of this reference is principally intended so that customers do not receive loose change but are able to "round" the amount received as change. The amount of rebate that is retained by the store is held in a computer memory and, as indicated above, also indicated on the receipt provided to a customer.

Retailers have been trying various marketing strategies to gain customer loyalty and continuity. One approach is to issue identification cards to customers and to reward a customer based on frequency of use of the card. Difficulties with this type of scheme are customer resistance to obtaining, carrying and using the card, and overhead costs in signing up customers and making the cards. Product manufacturers also have a need for a promotional program that develops customer loyalty, but also without the overhead associated with conventional coupon distributions. A manufacturer offering a discount on a product, or line of products, would like to be sure that each product for which a discount coupon is distributed and redeemed is actually purchased, but this is not always the case with conventional discount coupons, since they may be improperly redeemed, or simply never redeemed.

It will appreciated from the foregoing that there is a need for further improvement in the field of automatic distribution of coupons or discount certificates. Ideally, it would benefit consumers, retailers and manufacturers if there were some way to automatically reward the purchase of a variety of selected products, to ensure purchase of the discounted products, to permit a large number of consumers to participate without signing up for discount clubs or identification cards, and to encourage consumers to revisit the same store. The present invention satisfies all these needs, as will be appreciated from the following summary.

### SUMMARY OF THE INVENTION

According to respective first and second aspects of this invention, there is provided a system and a method as claimed in claims 1 and 7 respectively.

More specifically, the step of generating a discount certificate includes creating a discount certificate list in which each entry corresponds to a different discountable product identified in the customer order, adding to the list when a discountable product is identified that does not already have an entry in the list, and incrementing an item count in the list when a discountable product is identified that already has an entry in the list. The method further comprises the steps of detecting the end of the customer transaction, determining whether any item in the list should be excluded from the printed discount certificate, and forming a printable image of the discount certificate from the qualifying entries in the list.

The method further comprises the steps of printing the printable image of the discount certificate, and maintaining a log of printed discount certificates. When the customer returns to the store to redeem the certificate, the method further comprises the step of processing the redemption of the cumulative discount certificate. Processing the redemption may include maintaining a log of redeemed certificates, and applying the amount of the discount in the certificate to a customer order.

In terms of apparatus, the system comprises a plurality of terminals at customer checkout locations, each having means for reading product codes on purchased items in a customer order; a store controller with which the terminals can communicate, the store controller having access to an item record file contain; ing price and other information for each product item; means for storing the terms of multiple product discounts that are subject to accumulation on a single discount certificate; means for identifying triggering products in the customer order; and means for automatically generating a printable discount certificate, containing accumulated discounts relating to all of the triggering products identified during processing of a customer order. The apparatus also includes means for printing the discount certificate for immediate customer distribution, and means for inhibiting printing of the discount certificate if the customer's total purchase is below a preselected threshold.

More specifically, the means for automatically generating a printable discount certificate includes means for creating a discount certificate list containing an entry for each discountable triggering product identified in the customer order, and means for incrementing an item count upon subsequent identification of a triggering item for which an entry already exists in the list. The means for generating the printable discount certificate further includes means responsive to detection of the end of a customer transaction, for determining whether any items on the list should be excluded from printing, and for generating the printable certificate from qualifying items on the list.

The apparatus also preferably includes means for processing redemption of a printed discount certificate in a subsequent customer order, and applying an accumulated discount to the subsequent customer order, and means for maintaining a log of cumulative discount certificates printed and cumulative discount certificates redeemed.

It will be appreciated from the foregoing that the present invention represents a significant advance in the field of automatic generation of discount coupons and certificates at the point of sale of retail products. In particular, the invention provides a convenient method for the generation of a cumulative discount certificate that is redeemable on a subsequent visit to the store. The cumulative discount certificate avoids many of the problems associated with conventional discount coupons and with coupons for specific products or manufacturers. Other aspects and advantages of the invention will become apparent from the following more detailed description, taken in conjunction with the accompanying drawings.

### BRIEF DESCRIPTION OF THE DRAWINGS

FIGURE 1 is a simplified block diagram showing the apparatus of a point-of-sale computer system incorporating the present invention for use in a retail store;
FIG. 2 is a flowchart showing the functions performed in a general wait state processing loop, in accordance with the method of the invention;
FIG. 3 is a flowchart showing the functions performed in processing input data and generating printable discount certificates in accordance with the method of the invention; and
FIG. 4 is a flowchart showing the functions performed in processing output data in accordance with the method of the invention.

### DESCRIPTION OF THE PREFERRED EMBODIMENT

### Overview:

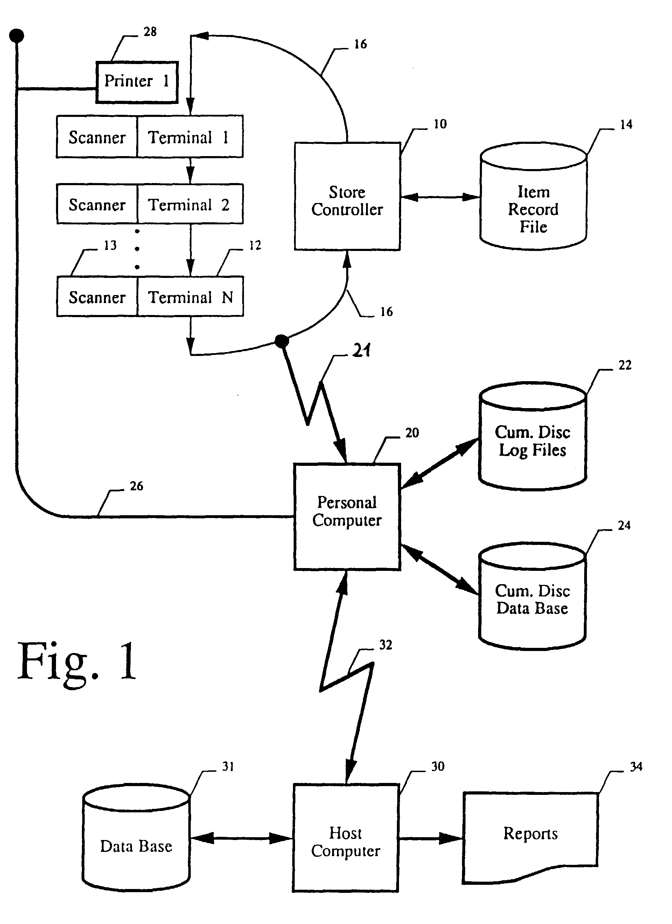

As shown in the drawings for purposes of illustration, the present invention is concerned with point-of-sale systems for recording sales transactions involving discount coupons or certificates. FIG. 1 shows in broad outline the components of such a system. In each store in which the invention is to be used, there is a store point-of-sale controller, indicated by reference numeral 10, and a plurality of checkout terminals 12, each having an associated optical scanner 13. Associated with the store controller 10 are a number of files, one of which is an item record file, indicated at 14, and these files are used by the controller to provide information to the terminals 12. The item record file 14 contains a record for each product sold in the store, and is used to access price and other information concerning the product.

In a typical store installation, the terminals 12 and the store controller are connected together in ring bus configuration, known as the terminal processing loop, indicated at 16. Communication between the store controller 10 and the terminals 12 is made over the terminal processing loop 16.

The components described thus far, including the store controller 10, the terminals 12, the item record file 14, and the terminal processing loop 16, together constitute a conventional retail point-of-sale system. In accordance with the invention, transactions taking place at the terminals are monitored to detect the sale of preselected triggering products, and printable cumulative discount certificates are generated as required. The invention is implemented principally in software form in a personal computer 20, which is coupled to the terminal processing loop 16, as indicated by line 21, in such a manner that the personal computer appears to the store controller 10 to be another terminal.

Associated with the personal computer 20 are two file systems: a cumulative discount data base 24 and cumulative discount log files 22. The personal computer 20 detects the purchase of triggering products at the terminals 12, retrieves the terms of each discount deal from the cumulative discount data base 24, generates printable discount certificates, and logs each discount certificate in the log files 22. The personal computer 20 also controls printing of the cumulative discount certificates, through a printer output bus 26, which is connected to a printer at each terminal 12, one of the printers being shown at 28.

The personal computer 20 is also coupled to a retailer host computer 30, as indicated by line 32, which may be a telephone line or some other communication link. The retailer host computer 30 controls communications with all store controllers in the retailer's various stores, and is responsible for generating various accounting reports, as indicated at 34. The retailer host computer 30 has an associated data base 36 of various files relating to the retailer's entire store operations.

The item record file 14 is a standard price file used in point-of-sale systems, except that it includes a trigger flag, which is an additional one-bit field. In the process of coupon creation, the file 14 is accessed to determine if a product being purchased is a triggering product. If so, a corresponding record is retrieved from the cumulative discount data base 24. This provides additional information about the discount deal that is in effect for this particular product, specifically the amount of the discount. Instead of immediately creating a discount coupon, however, the method of the invention accumulates the discount with any others detected in the same customer order. Then, at the end of the customer transaction, a cumulative discount certificate is generated and printed. Basically, the discount certificate provides a cumulative cash discount to be applied to another order when the customer returns the certificate to the store on a subsequent visit. These operations will now be discussed in further detail.

### Certificate creation and redemption:

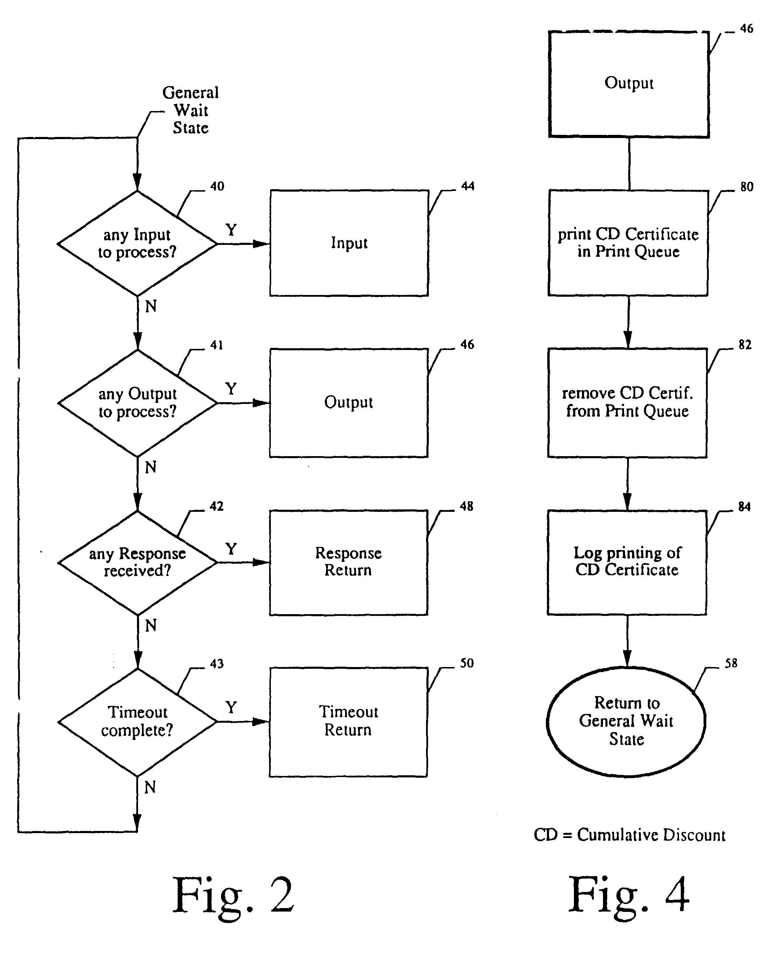

The coupon creation functions performed by the apparatus of the invention are shown in FIGS. 2, 3 and 4. FIG. 2 illustrates a "general wait state" of processing performed in the personal computer 20, which involves cyclic checking to determine whether any specific processing task needs to be performed. Once processing is initiated to a certain stage, a return is made to the general wait state, as will be further explained. For purposes of explanation, the processing steps performed by the invention are depicted as involving a transaction at a single terminal. It will be understood, however, that the personal computer 20 provides effectively simultaneous processing for all of the terminals 12, but to illustrate processing for multiple terminals would render the flowcharts unduly complicated.

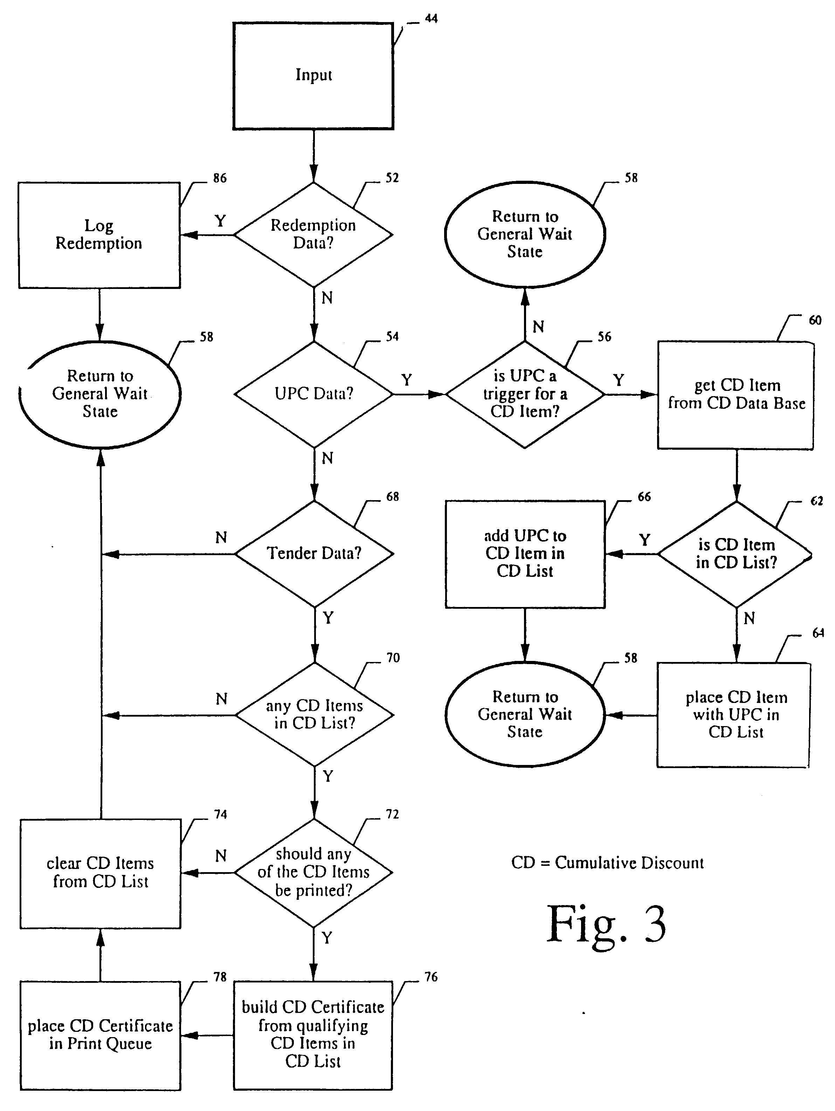

The general wait state processing loop shown in FIG. 2 includes a series of four decision blocks 40-43. In block 40, the computer 20 determines whether there is any input data to process. Input data is either from a terminal bar code scanner (not shown), or from a terminal keyboard (not shown). If there is input to process, the computer 20 enters an input processing sequence, shown at 44 and, in more detail, in FIG. 3. In block 41, the computer determines whether there is any output to process. If so, an output processing sequence is entered, as indicated at block 46 and, in more detail, in FIG. 4.

Block 42 in the general wait state processing loop determines whether any response has been received from a prior request made to the controller 10 for file access. As will become apparent, the computer 20 makes a number of requests for file access but, because gaining access to a file may take a relatively long time, processing continues in the general wait state loop until a response to the request is received. Then a response return is made, as indicated at 48, which simply means that control is transferred back to a point in the program at which the file access request was made, so that the program can continue in its proper sequence. Finally, decision block 43 in the general wait state loop determines whether a time-out is complete. In some point-of-sale systems, printing of cumulative discount certificates may be accomplished without a completely separate printer for that purpose. There may be a separate print station for printing the certificates, but the print head may be shared by other printing functions, such as customer receipt printing. In this case, it may be necessary to avoid having the printing of so many discount certificates (and possibly other types of discount coupons) that other printing functions are precluded. Therefore, the printing of a discount certificate, or of a substantial part of the certificate, can be followed by a request for a time-out, to allow other printing functions to gain access to the printer. Until the time-out is complete, as determined in block 43, processing remains in the general wait state loop. When the time-out is complete, a time-out return is made, as indicated in block 50, to continue processing at the point from which the time-out was requested.

FIG. 3 shows the input processing sequence 44 in more detail. First, in block 52, the input data is examined to determine whether it is redemption data. Each printed discount certificate will have a special bar code that can be read at the checkout counter, and distinguished from the Uniform Product Codes that identify products. If the input is not redemption data, it is next checked, in block 54, to determine if it is Uniform Product Code (UPC) data. If so, a record corresponding to the UPC in the input data is retrieved from the item record file 14 (FIG. 1), and is checked to determine whether the item is one that should trigger the generation of a cumulative discount certificate, as indicated in block 56. If the item is not one that has been preselected to trigger generation of a certificate, no further processing is needed for this item and a return is made to the general wait state, as indicated at 58. If the item is a triggering item, a corresponding record is retrieved from the cumulative discount data base 24 (FIG. 1), as indicated in block 60. The succeeding processing steps generate a cumulative discount (CD) list for the customer order presently being processed. If the item being processed is not already in the list, as determined in decision block 62, it is placed in the list, as indicated in block 64. If the item is already in the list, the number of purchases of this item is incremented, as indicated in block 66, and a return is made to the general wait state processing loop, as indicated at 58. Repeated processing of data corresponding to purchased items, in blocks 54 through 66, results in the generation of a discount list from which a certificate may be printed. This list is stored internally in the computer 20 until the end of the customer transaction, as indicated by the "tender" state of the checkout keyboard.

When the customer tenders payment for the order, the operator actuates a "tender" key to terminate the transaction and open a cash drawer at the checkout counter. The actuation of the tender key is detected as indicated in decision block 68. Prior to actuation of the key, processing proceeds from block 68 to the general wait state loop, as indicated at 58. Once the tender key has been detected, the cumulative discount list is examined to determine if it contains any items, as indicated in block 70. If the list is empty, return is made to the general wait state loop, via block 58. If the list contains one or more items, a decision is made as to whether a cumulative discount certificate should be printed, as indicated in block 72. This decision can be based on one or more desired criteria, such as whether items totalling to a minimum dollar amount have been purchased. If the criteria have not been met, the cumulative discount list for the transaction is cleared, as indicated in block 74, and return is made to the general wait state processing loop, via block 58. If the desired criteria are met, as determined in decision block 72, a printable cumulative discount certificate is generated, as indicated in block 76, and is placed in a print queue, as indicated in block 78, before clearing the list (block 74) and returning to the general wait state loop via block 58.

Printing the certificate is accomplished with the steps of output processing 46, as shown in more detail in FIG. 4. Basically, output processing involves three steps: printing a certificate from the print queue, as indicated in block 80, removing from the print queue an entry corresponding to the printed certificate (block 82), and logging the printing of the certificate (block 84) in the cumulative discount certificate log files 22 (FIG. 1). Then a return is made to the general wait state processing loop, via block 58. If other certificates remain to be printed, they will be retrieved from the print queue on a subsequent return to these output processing steps.

The only aspect of the invention not yet discussed is certificate redemption. Each printed cumulative discount certificate is redeemable on a subsequent visit to the store. When the certificate is presented, the checkout counter operator scans a bar code on the certificate and this action generates input data to the personal computer 20 (FIG. 1). Input data relating to redemption is recognized, as indicated in decision block 52 (FIG. 3), and the redemption is logged, as indicated in block 86 of FIG. 3. Logging redemptions involves two basic functions: maintaining a cumulative record of certificates that have been redeemed, in the files 22 (FIG. 1), and applying the discount to the customer order.

### Hardware and Software Overview:

As mentioned earlier, the computer 20 is a personal computer, utilizing a microprocessor chip such as the Intel 80386. Software for performing the functions described above may run under a conventional operating system for such a computer, such as the Microsoft Disk Operating System (MSDOS). The functions described can be programmed in any desired manner or language.

Some details of the software will be dependent on the point-of-sale hardware with which the software must interface in obtaining data from the terminal processing loop (16, FIG. 1). Distinctly different interface programs will be needed to adapt the invention of operation with either IBM, Datachecker, NCR or Sweda point-of-sale systems, but the specification of these interfaces are design details not critical to the invention.

### Summary of Advantages:

It will be appreciated from the foregoing that the present invention provides significant advantages over prior systems for automatically generating discount coupons. The principal advantage of the invention is its simplicity. No special customer cards are needed, and no customer participation other than in electing to buy specially advertised triggering products. The advertising can be in the store, so that coupon distribution problems are totally avoided and all customers entering the store are potential participants in the discount program. Even customers who are unaware of the in-store advertising may unknowingly become participants in the program. From the retailer standpoint, the scheme is ideal because of its simplicity and flexibility. The discounts are paid for by manufacturers; there are no mailing costs; large numbers of customers are involved and given incentive to return to the store; the redemption process is simple and efficient; and the program is easy to implement, modify, or discontinue. From the manufacturer's perspective, the invention is also attractive, in that it avoids coupon distribution costs; involves large numbers of customers; guarantees the purchase of every product to which a discount is applied (no improper redemptions); and can be administered easily and over a shorter time period than conventional coupons.

An important aspect of the invention is that the discount certificate is a cumulative one, and may include discounts for different products and different manufacturers on the same certificate. The total discount amount is typically the most important aspect of the program for a customer, but this dollar total is usually difficult to ascertain in a conventional discount coupon environment. With the cumulative discount certificate, the customer is made more aware of the advantages of buying the promoted products, all of which are listed on the certificate. Although these products may be from various manufacturers, a retailer may also, in conjunction with manufacturers, operate a promotional program in which one or more groups of manufacturer's products are featured, to foster customer awareness of the selected groups of products.

Although an embodiment of the invention has been described in detail for purposes of illustration, various modifications may be made without departing from the scope of the invention. Accordingly, the invention is not to be limited except as by the appended claims.

## Claims

1. A system for generating a printable cumulative discount certificate in a retail store, solely in response to a customer's decision to purchase one or more preselected items, the system including:
a plurality of terminals (12) at customer checkout locations, each having means (13) for reading product codes on purchased items in a customer order:
a store controller (10) with which the terminals can communicate, the store controller having access to an item record file (14) containing price and other information for each product item;
means (20) for identifying triggering products in the customer order;
means (20) for retrieving from a storage means (24) the terms of discounts relating to multiple separate products that are triggering products;
means (20) for automatically generating a printable cumulative discount certificate, which is redeemable as a cash discount in a subsequent transaction;
the system being characterized by the means for generating including means for creating a discount certificate list in which each entry corresponds to a different triggering product identified in the customer order, and means responsive to detection of the end of the customer transaction, for determining whether any items on the list should be excluded to leave only qualifying items on the printable cumulative discount certificate.

2. A system as defined in claim 1, and further comprising means for printing the cumulative discount certificate for immediate customer distribution.

3. A system as defined in claim 2, and further including means for inhibiting printing of the cumulative discount certificate if the customer's purchase is below a preselected threshold.

4. A system as defined in any one of the preceding claims, wherein the means for creating the discount certificate list includes means for incrementing an item count upon subsequent identification of a triggering item for which an entry already exists in the list.

5. A system as defined in any one of the preceding claims, and further comprising means for processing redemption of a printed cumulative discount certificate in a subsequent customer order, and applying an accumulated cash discount to the subsequent customer order.

6. A system as defined in any one of the preceding claims, and further comprising means for maintaining a log (86) of cumulative discount certificates printed and cumulative discount certificates redeemed.

7. A method for machine generating a printable cumulative discount certificate for use in a retail store point-of-sale system having a plurality of terminals at customer checkout locations, each with means for reading product codes on purchased items in a customer order; the method comprising the steps of:
applying a triggering flag to records in an item record file (14) corresponding to multiple separate products for which a cumulative discount certificate may be printed and holding in store means (24) the terms associated with said discountable products in store means;
determining discountable products in a customer order using the triggering flag;
retrieving the terms of the discountable product from said store means;
machine generating a printable cumulative discount certificate that is based on accumulated discounts of all of the discountable products identified in the determining step, the printable discount certificate being redeemable as a cash discount in a subsequent purchase transaction;
the generating step including creating a discount certificate list in which each entry corresponds to a different discountable product identified in the customer order;
detecting the end of the customer transaction; and
determining whether any item in the list should be excluded from the printed cumulative discount certificate.

8. A method as defined in claim 7, wherein the step of generating a cumulative discount certificate includes:
adding to the list when a discountable product is identified that does not already have an entry in the list; and
incrementing an item count in the list when a discountable product is identified that already has an entry in the list.

9. A method as defined in claims 7 or 8, and further comprising the steps of:
printing a printable image of the cumulative discount certificate; and
maintaining a log of printed cumulative discount certificates.

10. A method as defined in claim 9, and further comprising the step of:
processing the redemption of a cumulative discount certificate.

11. A method as defined in claim 10, wherein the step of processing the redemption includes:
maintaining a log of redeemed cumulative certificates and
applying the amount of the cumulative discount certificate as a cash discount to a customer order in which the certificate is presented.

## Patentansprüche

1. System zur Generierung einer druckbaren kumulativen Rabattbescheinigung in einem Einzelhandelsgeschäft, ausschließlich in Reaktion auf die Entscheidung eines Kunden, einen oder mehrere vorgewählte Artikel zu kaufen, wobei das System folgendes umfaßt:
eine Vielzahl von Terminals (12) an Kundenabfertigungsstellen, die jeweils mit einer Einrichtung (13) zum Lesen von Produktcodes auf gekauften Artikeln in einem Kundenauftrag versehen sind;
eine Lagerkontrollvorrichtung (10), mit der die Terminals kommunizieren können, wobei die Lagerkontrollvorrichtung Zugriff hat auf eine Artikelregistrierungsdatei (14), die Preise und sonstige Informationen zu jedem Artikel enthält;
eine Einrichtung (20) zur Identifizierung von Triggerprodukten in dem Kundenauftrag;
eine Einrichtung (20), mit der die Rabattbedingungen zu der Vielzahl von einzelnen Produkten, die Triggerprodukte sind, aus einer Speichereinrichtung (24) ausgelesen werden können;
eine Einrichtung (20) zur automatischen Generierung einer druckbaren kumulativen Rabattbescheinigung, die als Barzahlungsrabatt bei einer anschließenden Transaktion eingelöst werden kann;
wobei das System dadurch gekennzeichnet ist, daß die Generierungseinrichtung eine Einrichtung zur Erstellung einer Liste von Rabattbescheinigungen umfaßt, in der jeder Eintrag einem anderen in dem Kundenauftrag identifizierten Triggerprodukt entspricht, und eine Einrichtung, die auf die Erfassung des Endes der Kundentransaktion anspricht, um festzustellen, ob irgendwelche Artikel auf der Liste ausgeschlossen werden sollten, so daß nur noch qualifizierende Artikel auf der durckbaren kumulativen Rabattbescheinigung zurückbleiben.

2. System nach Anspruch 1, und des weiteren umfassend eine Einrichtung zum Drucken der kumulativen Rabattbescheinigung, die unverzüglich an den Kunden ausgegeben wird.

3. System nach Anspruch 2, und des weiteren umfassend eine Einrichtung, die verhindert, das die kumulative Rabattbescheinigung ausgedruckt wird, wenn der Einkauf des Kunden unter einem vorgewählten Schwellwert liegt.

4. System nach einem der vorhergehenden Ansprüche, bei dem die Einrichtung zum Erstellen der Rabattbescheinigungsliste eine Einrichtung umfaßt zum Inkrementieren einer Artikelzahl nach der anschließenden Identifizierung eines Triggerartikels, für den es in der Liste bereits einen Eintrag gibt.

5. System nach einem der vorhergehenden Ansprüche, und des weiteren umfassend eine Einrichtung zur Bearbeitung des Einlösens einer gedruckten kumulativen Rabattbescheinigung bei einem anschließenden Kundenauftrag, und zum Anrechnen eines aufgelaufenen Barzahlungsrabatts auf den anschließenden Kundenauftrag.

6. System nach einem der vorhergehenden Ansprüche, und des weiteren umfassend eine Einrichtung zum Führen eines Protokolls (86) über die gedruckten kumulativen Rabattbescheinigungen und über die eingelösten kumulativen Rabattbescheinigungen.

7. Verfahren zur maschinellen Generierung einer druckbaren kumulativen Rabattbescheinigung zur Verwendung in einem Einzelhandels-Verkaufspunktsystem mit einer Vielzahl von Terminals an Kundenabfertigungsstellen, jeweils mit einer Einrichtung zum Lesen von Produktcodes auf gekauften Artikeln in einem Kundenauftrag, wobei das Verfahren die folgenden Schritte umfaßt:
Anbringen einer Triggermarke an Datensätzen in einer Artikelregistrierungsdatei (14) entsprechend einer Vielzahl von einzelnen Produkten, für die eine kumulative Rabattbescheinigung ausgedruckt werden kann, und in der Speichereinrichtung (24) die Bedingungen speichern, die zu den rabattfähigen Produkten in der Speichereinrichtung gehören;
Ermitteln von rabattfähigen Produkten in einem Kundenauftrag anhand der Triggermarke;
Auslesen der Bedingungen des rabattfähigen Produkts aus der Speichereinrichtung;
maschinelles Generieren einer druckbaren kumulativen Rabattbescheinigung, die auf den kumulierten Rabatten aller in dem Ermittlungsschritt identifizierten rabattfähigen Produkte basiert, wobei die druckbare Rabattbescheinigung als Barzahlungsrabatt bei einem anschließenden Einkauf eingelöst werden kann;
wobei der Schritt des Generierens das Erstellen einer Rabattbescheinigungsliste umfaßt, in der jeder Eintrag einem anderen bei dem rabattfähigen Kundenauftrag identifizierten Produkt entspricht;
Erfassen des Endes der Kundentransaktion; und
Feststellen, ob irgendein Artikel in der Liste aus der gedruckten kumulativen Rabattbescheinigung ausgeschlossen werden sollte.

8. Verfahren nach Anspruch 7, bei dem der Schritt des Generierens einer kumulativen Rabattbescheinigung folgendes umfaßt:
Eintragen in die Liste, wenn ein rabattfähiges Produkt identifiziert wird, das nicht bereits in die Liste eingetragen ist; und
Inkrementieren einer Artikelzahl in der Liste, wenn ein rabattfähiges Produkt identifiziert wird, das bereits in die Liste eingetragen ist.

9. Verfahren nach Anspruch 7 oder 8, und des weiteren umfassend die folgenden Schritte:
Drucken eines druckbaren Bildes der kumulativen Rabattbescheinigung; und
Führen eines Protokolls über die gedruckten kumulativen Rabattbescheinigungen.

10. Verfahren nach Anspruch 9, und des weiteren umfassend den folgenden Schritt:
Bearbeitung des Einlösens einer kumulativen Rabattbescheinigung.

11. Verfahren nach Anspruch 10, bei dem der Schritt der Bearbeitung des Einlösens folgendes umfaßt:
Führen eines Protokolls über eingelöste kumulative Bescheinigungen, und
Anrechnen des Betrags der kumulativen Rabattbescheinigung als Barzahlungsrabatt auf einen Kundenauftrag, bei dem die Bescheinigung vorgelegt wird.

## Revendications

1. Système de génération d'un certificat de remise cumulative imprimable dans un magasin de détail, seulement en réponse à la décision d'un client d'acheter un ou plusieurs articles prédéterminés; le système comprenant :
une pluralité de terminaux (12) placés à des endroits de controle de sortie de client, chaque terminal comportant des moyens (13) de lecture de codes de produit sur les articles achetés, dans une commande de client ;
une unité de commande de magasin (10) avec laquelle les terminaux peuvent communiquer, l'unité de commande de magasin ayant accès à un fichier d'enregistrement d'articles (14) contenant le prix et d'autres informations pour chaque article de produit ;
des moyens (20) d'identification de produits de déclenchement dans la commande du client ;
des moyens (20) d'extraction, à partir d'une mémoire (24), des termes de remises relatifs à des produits séparés multiples qui sont des produits de déclenchement ;
des moyens (20) de génération automatique d'un certificat de remise cumulative imprimable qui est remboursable sous la forme d'un rabais de caisse dans une transaction ultérieure ;
le système étant caractérisé en ce que les moyens de génération comprennent des moyens de création d'une liste de certificats de remise dans laquelle chaque entrée correspond à un produit de déclenchement différent identifié dans la commande du client, et des moyens qui répondent à la détection de la fin de la transaction du client, pour déterminer si des articles sur la liste doivent ou non être exclus afin de laisser seulement les articles qualificatifs sur le certificat de remise cumulative imprimable.

2. Système selon la revendication 1, comprenant en outre des moyens d'impression du certificat de remise cumulative, pour distribution immédiate au client.

3. Système selon la revendication 2, comprenant en outre des moyens d'empêchement de l'impression du certificat de remise cumulative si l'achat du client est inférieur à un seuil prédéterminé.

4. Système selon une quelconque des revendications précédentes, dans lequel les moyens de création de la liste de certificats de remise comprennent des moyens d'incrémentation d'un compte d'articles lors de 1' identification subséquente d'un article de déclenchement pour lequel une entrée existe déjà dans la liste.

5. Système selon une quelconque des revendications précédentes, comprenant en outre des moyens de traitement du remboursement d'un certificat de remise cumulative imprimé dans une commande ultérieure du client, et d'application d'un rabais de caisse accumulé à la commande ultérieure du client.

6. Système selon une quelconque des revendications précédentes, comprenant en outre des moyens de tenue d'un registre (86) de certificats de remise cumulative imprimés et de certificats de remise cumulative remboursés.

7. Procédé de génération par machine d'un certificat de remise cumulative imprimable utilisable dans un système de pointsde vente de magasin de détail ayant une pluralité de terminaux situés à des endroits de contrôle de sortie des clients, comportant chacun des moyens de lecture de codes de produit sur les articles achetés dans une commande de client, le procédé comprenant les étapes de :
application d'un drapeau de déclenchement à des enregistrements, dans un fichier d'enregistrement d'articles (14) , correspondant à des produits séparés multiples pour lesquels un certificat de remise cumulative peut être imprimé, et maintien, dans une mémoire (24), des termes associés auxdits produits sujets à remise dans la mémoire ;
détermination des produits sujets à remise dans une commande de client, par utilisation du drapeau de déclenchement ;
extraction des termes du produit sujet à remise, à partir de ladite mémoire ;
génération par machine d'un certificat de remise cumulative imprimable qui est basé sur les remises accumulées de tous les produits sujets à remise identifiés à l'étape de détermination, le certificat de remise imprimable étant remboursable sous la forme d'un rabais de caisse dans une transaction d'achat ultérieure ;
l'étape de génération incluant la création d'une liste de certificats de remise dans laquelle chaque entrée correspond à un produit sujet à remise différent identifié dans la commande du client ;
détection de la fin de la transaction du client; et
détermination de ce qu'un article quelconque dans la liste doit ou non être exclu du certificat de remise cumulative imprimé.

8. Procédé selon la revendication 7, dans lequel l'étape de génération d'un certificat de remise cumulative comprend :
l'addition à la liste lorsqu'on identifie un produit sujet à remise qui n'a pas déjà une entrée dans la liste ; et
l'incrémentation d'un compte d'articles dans la liste lorsqu'on identifie un produit sujet à remise qui a déjà une entrée dans la liste.

9. Procédé selon la revendication 7 ou 8, comprenant en outre les étapes de :
impression d'une image imprimable du certificat de remise cumulative ; et
tenue d'un registre de certificats de remise cumulative imprimés.

10. Procédé selon la revendication 9, comprenant en outre l'étape de :
traitement du remboursement d'un certificat de remise cumulative.

11. Procédé selon la revendication 10, dans lequel l'étape de traitement du remboursement comprend :
la tenue d'un registre de certificats de remise cumulative remboursés ; et
application du montant du certificat de remise cumulative sous la forme d'un rabais de caisse à une commande de client dans laquelle le certificat est présenté.
